# EUROPÄISCHE PATENTANMELDUNG

(11) **EP 0 776 787 A2**
(43) Veröffentlichungstag der Anmeldung: **04.06.1997**
(21) Anmeldenummer: 96119160.8
(22) Anmeldetag: 29.11.1996
(51) Int. Cl.: B60R 5/00

(54) **Seitlich ausziehbare Gepäckraumabdeckung**

(30) Priorität: 30.11.1995 DE 19544611
(71) Anmelder: Parat-Werk Schönenbach GmbH + Co KG, 94089 Neureichenau/Ndb (DE)
(72) Erfinder: Blaufelder, Claus, Dr.-Ing., 90547 Stein (DE)
(74) Vertreter: Eichstädt, Alfred, Dipl.-Ing.

(57) **Zusammenfassung**

Die Erfindung betrifft eine Gepäckraumabdeckung zum Abdecken des Laderaums von Fahrzeugen, welche eine mit dem Fahrzeug verbundene Welle aufweist, an der eine Abdeckbahn befestigt ist. Die Welle ist parallel zur Fahrtrichtung an einer Seitenwand des Fahrzeugs befestigt. Die Abdeckbahn ist zum Abdecken des Laderaums senkrecht zur Fahrrichtung ausziehbar.

## Beschreibung

Die Erfindung betrifft eine Gepäckraumabdeckung zum Abdecken des Laderaums von Fahrzeugen mit den im Oberbegriff des Anspruchs 1 angegebenen Merkmalen.

Aus der DE-C2-42 00 021 ist eine Laderaumabdeckung für den Kofferraum eines Fahrzeugs bekannt. Diese weist eine längliche Aufnahmehalterung auf, die zur Aufnahme einer Abdeckbahn vorgesehen ist. Die Abdeckbahn kann in die Aufnahmehalterung eingefahren oder in entgegengesetzter Richtung zur Abdeckung des Kofferraums ausgefahren werden. Die Aufnahmehalterung ist lösbar unmittelbar rückwärtig benachbart einer Fond-Sitzlehne angebracht und in an den Seitenwanden des Fahrzeugs angebrachten Führungsschienen verschiebbar, um bei ausgefahrener Abdeckbahn, d. h. bei abgedecktem Kofferraum, auf einfache Weise einen Teil des Kofferraums zugänglich zu machen.

Aus der DE-C2-39 22 450 ist ein Abdeckrollo zum Abdecken des Laderaums von Personenkraftfahrzeugen bekannt. Dieser Abdeckrollo weist ein längliches, aus dem Laderaum zu entnehmendes Gehäuse auf, in welchem eine Wickelwelle drehbar gelagert ist. An der Wickelwelle ist eine Rollobahn befestigt, die zur Abdeckung des Laderaums durch einen Tuchschlitz des Gehäuses ausziehbar ist. Die Stirnseiten des länglichen Gehäuses sind mit Zapfen versehen, die parallel zu der Achse der Wickelwelle verschieblich gelagert sind. Die Zapfen sind mittels Federn vorgespannt und rasten beim Einsetzen des Abdeckrollos in das Personenkraftfahrzeug in an den Kraftfahrzeugseitenwänden angebrachten Aufnahmetaschen ein. Zum Ausbau des Abdeckrollos sind von außen zugängliche Betätigungsglieder vorgesehen, deren Betätigungsweg rechtwinklig zum jeweiligen Verschiebeweg des zugehörigen Zapfens liegt, so daß bei einem Drücken der Betätigungsglieder die Zapfen aus den fahrzeugseitigen Aufnahmetaschen gedrückt werden.

Weiterhin ist aus der EP-B1-0 234 497 ein Abdeckrollo bekannt. Auch dieses weist ein längliches Gehäuse auf, in welchem eine Tuchwelle drehbar gelagert ist. Das längliche Gehäuse des Abdeckrollos weist an den Stirnseiten Vorsprünge auf, die in Ausnehmungen von an den Kraftfahrzeugseitenwänden befestigten Haltern einrastbar sind.

Aus der US-A-5,050,923 ist ein in setlicher Richtung aufrollbares Planensystem zur Abdeckung eines Containers bekannt, der beispielsweise als Lastwagenanhänger realisiert sein kann. Die bekannte Plane wird zum Abdecken des Containers über senkrecht zur Fahrtrichtung angeordnete, mittels Riemen miteinander verbundene Stützbögen gerollt und auf der gegenüberliegenden Seite befestigt.

Weiterhin ist aus der DE-A1-29 50 743 ein Sonnenschutzrollo für Kraftfahrzeuge bekannt, welchs eine Hülle enthält, die zur Montage entlang des Randes eines Seitenfensters oder eines Rückfensters des Kraftfahrzeugs geeignet ist.

Ausgehend von diesem Stand der Technik liegt der Erfindung die Aufgabe zugrunde, eine neue Gepäckraumabdeckung anzugeben.

Diese Aufgabe wird durch eine Gepäckraumabdeckung mit den im Patentanspruch 1 angegebenen Merkmalen gelöst. Vorteilhafte Ausgestaltungen und Weiterbildungen der Erfindung ergeben sich aus den abhängigen Patentansprüchen.

Die Vorteile der Erfindung bestehen insbesondere darin, daß bei einem teilweisen oder vollständigen Umklappen der Rücksitzlehne des Fahrzeugs keinerlei Rücksicht auf die Gepäckraumabdeckung genommen werden muß. Insbesondere ist es nicht notwendig, die Gepäckraumabdeckung aus dem Fahrzeug auszubauen und beispielsweise in der Garage abzustellen, wenn die Rücksitzlehne umgeklappt werden soll. Weiterhin besteht bei der im Patentanspruch 2 angegebenen Gepäckraumabdeckung die Möglichkeit, diese ohne eine längliche Halterung bzw. ein längliches Gehäuse zu realisieren, da die Gepäckraumabdeckung durch die Integration in eine Seitenverkleidung des Fahrzeugs im nicht ausgezogenen Zustand sowohl vor Verschmutzung als auch vor unerwünschten Berührungen geschützt ist. Durch diese Integration in eine Seitenverkleidung des Fahrzeugs wird zudem die Optik des Fahrzeuginnenraums verbessert, da die Gepäckraumabdeckung im nicht ausgezogenen Zustand der Abdeckbahn kaum sichtbar ist.

Mittels der im Anspruch 3 angegebenen Merkmale wird für den Benutzer ein Schließen der Gepäckraumabdeckung erleichtert, da eine Zugstange gut handbar ist.

Die Vorteile der im Anspruch 4 angegebenen Gepäckraumabdeckung bestehen darin, daß die Abdeckbahn im ausgezogenen Zustand nicht nach unten durchhängt.

Mittels der im Anspruch 9 angegebenen Merkmale wird erreicht, daß auch die fahrzeugseitigen Gegenstücke, an bzw. in denen die Gepäckraumabdeckung im ausgezogenen Zustand befestigt wird, unauffällig im Fahrzeug angebracht sind.

Weitere vorteilhafte Eigenschaften der Erfindung ergeben sich aus der Erläuterung eines Ausführungsbeispiels anhand der Figuren.

Es zeigt:
- - Figur 1: eine erste Skizze zur grundsätzlichen Erläuterung der Anbringung der beanspruchten Gepäckraumabdeckung im Fahrzeug gemäß eines ersten Ausführungsbeispiels und
- - Figur 2: eine zweite Skizze zur grundsätzlichen Erläuterung der Anbringung der beanspruchten Gepäckraumabdeckung im Fahrzeug gemäß eines zweiten Ausführungsbeispiels.

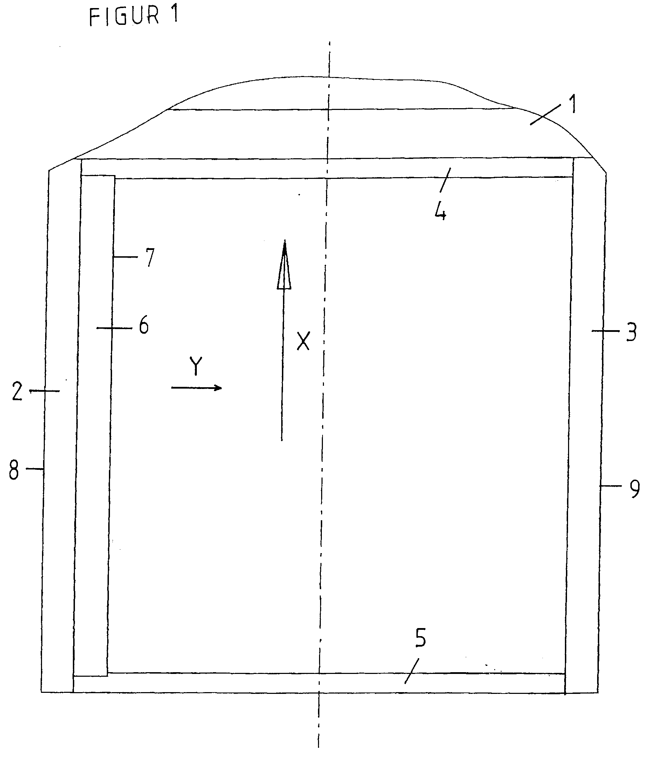

Die Figur 1 zeigt eine erste Skize in Form einer Draufsicht zur grundsätzlichen Erläuterung der Anbringung der beanspruchten Gepäckraumabdeckung im Fahrzeug. Das in der Figur 1 dargestellte Fahrzeug weist eine Rücksitzbank 1, eine mit der linken Fahrzeugseitenwand 8 verbundene linke Seitenverkleidung 2, eine mit der rechten Fahrzeugseitenwand 9 verbundene rechte Seitenverkleidung 3, eine an der Rückseite der Rücksitzlehne angeordnete Führungsschiene 4, eine an der Heckklappe des Fahrzeugs befestigte Führungsschiene 5 und eine Abdeckbahn 6 auf, an deren Vorderseite eine Zugstange 7 befestigt ist. Die Fahrtrichtung des Fahrzeugs ist mit "x" und die Richtung, in der die Abdeckbahn 6 zur Abdeckung des Laderaums ausgezogen wird, mit "y" bezeichnet.

Die in der Figur 1 nicht gezeigte hintere Seite der Abdeckbahn 6 ist an einer drehbaren Welle befestigt, die in die linke Seitenverkleiduhng 2 des Fahrzeugs integriert und dort in fahrzeugseitige Lager eingebracht ist, die an der linken Fahrzeugseitenwand 8 befestigt sind.

Im Unterschied zu bekannten Gepäckraumabdeckungen ist es nicht notwendig, die drehbare Welle in einer länglichen Halterung bzw. einem länglichen Gehäuse anzuordnen. Denn durch die Integration der Gepäckraumabdeckung in die Seitenverkleidung 2 des Fahrzeugs ist sichergestellt, daß die Abdeckbahn 6 im nicht ausgezogenen Zustand nicht verschmutzen oder nicht in unerwünschter Weise berührt werden kann.

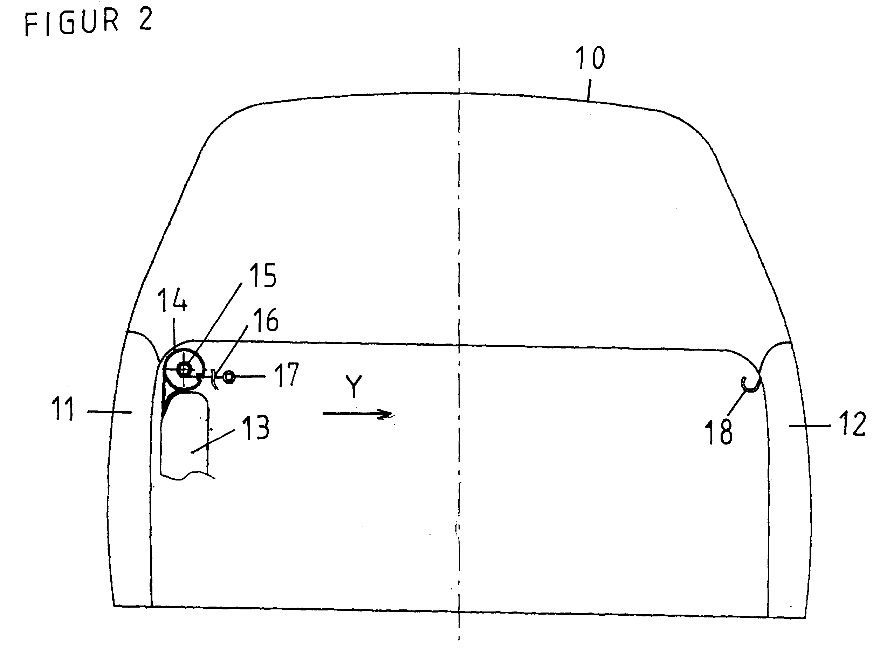

Alternativ dazu ist es aber auch möglich, die drehbare Welle in einer länglichen Halterung anzuordnen, wie es von herkömmlichen Gepäckraumabdeckungen bekannt ist. Dies ist in der Figur 2 gezeigt, die eine zweite Skizze zur grundsätzlichen Erläuterung der Anbringung der beanspruchten Gepäckraumabdeckung im Fahrzeug gemäß eines zweiten Ausführungsbeispiels für die Erfindung zeigt. Das in der Figur 2 dargestellte Fahrzeug weist ein Dach 10, eine linke Seitenwand 11, eine rechte Seitenwand 12, einen Radlauf 13, eine in Querschnittsform dargestellte längliche Halterung 14, eine drehbare Welle 15, eine an einem Ende mit der drehbaren Welle 15 und am anderen Ende mit der Zugstange 17 verbundene Abdeckbahn 16 und einen an der rechten Seitenwand des Fahrzeugs angebrachten Haken 18 auf.

Die Abdeckbahn 16 ist durch Ziehen an der Zugstange 17 in Richtung "y" des Pfeiles quer zur Fahrtrichtung zur Abdeckung des Laderaumes durch eine in der länglichen Halterung befindliche Öffnung ausziehbar. Im ausgezogenen Zustand kann die Zugstange 17 in an der rechten Fahrzeugseitenwand 12 angebrachte Haken 18 oder in eine anders ausgestaltete Aufnahmevorrichtung eingehängt werden.

Gemäß einer vorteilhaften Weiterbildung der Erfindung können an der Zugstange Haltezapfen angebracht sein, die bei ausgezogener Abdeckbahn in fahrzeugseitigen Ausnehmungen einrastbar sind. Diese fahrzeugseitigen Ausnehmungen sind vorzugsweise in der rechten Seitenverkleidung des Fahrzeugs vorgesehen.

Alternativ zu den oben beschriebenen Ausführungsbeispielen kann die drehbare Welle bzw. die Gepäckraumabdeckung natürlich auch an der rechten Seitenwand des Fahrzeugs befestigt und die Gegenstücke, in die die Abdeckbahn im ausgezogenen Zustand einhängbar ist, an der linken Seitenwand angebracht sein.

Die Abdeckbahn selbst besteht beispielsweise aus einem kunststoffverstärkten Gewebe bzw. einem anderen Material, welches sowohl faltenfrei ist als auch im gespannten Zustand eine ausreichende Formstabilität aufweist.

Weiterhin ist die beschriebene Gepäckraumabdeckung mit einer Dämpfungsvorrichtung versehen. Diese Dämpfungsvorrichtung bewirkt, daß die Abdeckbahn im teilweise oder vollständig ausgezogenen Zustand bei einem versehentlichen Lösen oder Loslassen der Zugstange 1, 17 nicht mit hoher Geschwindigkeit zurückschnellen kann. Daduch wird sichergestellt, daß weder Teile der Gepäckraumabdeckung selbst noch Teile des Fahrzeugs oder der Ladung durch eine zurückschnellende Zugstange beschädigt werden können. Auch ist die Verletzungsgefahr für sich im Fahrzeug befindliche Personen verringert.

Die Verwendung einer derartigen Dämpfungsvorrichtung ist auch bei Gepäckraumabdeckungen möglich, die eine mit dem Fahrzeug verbundene Welle aufweisen, an der eine Abdeckbahn befestigt ist, die zum Abdecken des Laderaums parallel oder antiparallel zur Fahrtrichtung ausziehbar ist, d. h. in Fahrtrichtung oder entgegegensetzt zur Fahrtrichtung. Bei einer derartigen Verwendung ist die mit dem Fahrzeug verbundene Welle selbstverständlich senkrecht zwischen den Seitenwänden des Fahrzeugs angeordnet.

Die genannte Dämpfungsvorrichtung begrenzt die Geschwindigkeit des Zurückschnellens der Abdeckbahn beispielsweise dadurch, daß ein oder mehrere mit der sich drehenden Welle verbundene Flügel in einer zähen Flüssigkeit geführt werden, bei der es sich um dickflüssiges Öl handeln kann.

Durch diese Bewegung der mit der Welle verbundenen Flügel in einer zähen Flüssigkeit wird das durch Federkraft bewirkte Zurückholen der Abdeckbahn vom ausgezogenen in den nicht ausgezogenen Zustand so verlangsamt, daß eine Beschädigung von Gegenständen oder eine Verletzung von Personen unwahrscheinlich ist.

In vorteilhafter Weise ist der bzw. sind die Flügel mit der Welle über ein Kupplungsglied verbunden. Dadurch wird erreicht, daß beim Ausziehen der Abdeckbahn der Flügel von der Welle entkoppelt ist, so daß das Ausziehen nicht durch in der zähen Flüssigkeit geführte Flügel erschwert ist. Bei der Rückwärtsbewegung der Abdeckbahn aus dem ausgezogenen Zustand bzw. dem Wiederaufrollen der Abdeckbahn auf die Welle sind die Flügel über das Kupplungsglied wieder mit der sich drehenden Welle fest verbunden, so daß - wie bereits oben beschrieben - die Geschwindigkeit des Zurückfahrens begrenzt ist.

Durch Wahl einer geeigneten Flüssigkeit und von Flügeln geeigneter Form und Größe oder durch Verwendung einer zusätzlichen Übesetzung kann die Maximalgeschwindigkeit des Zurückfahrens auf einen gewünschten Maximalwert begrenzt werden.

Weiterhin kann die Geschwindigkeit des Zurückfahrens auch davon abhängig gemacht werden, wie weit die Abdeckbahn ausgezogen ist. Beispielsweise erfolgt das Rückholen bei vollständig ausgezogener Abdeckbahn mit der gewünschten Maximalgschwindigkeit und wird immer langsamer, je mehr sich die am vorderen Ende der Abdeckbahn befestigte Zugstange der Welle nähert.

Alternativ dazu kann die auf die beim Zurückfahren der Abdeckbahn wirksame Dämpfungsvorrichtung auch anders realisiert sein, beispielsweise unter Verwendung eines Zahn rades, das mit weiteren Zahnrädern derart zusammenwirkt, daß die Geschwindigkeit des Zurückfahrens auf einen gewünschten Maximalwert begrenzt ist.

Die Feder zum Zurückholen der Abdeckbahn ist vorzugsweise als konische Spiralfeder realisiert, um die Aus- und Rückzugskräfte über den gesamten Aus- bzw. Rückzugsweg möglichst konstant zu halten.

## Patentansprüche

1. Gepäckraumabdeckung zum Abdecken des Laderaums von Fahrzeugen, mit einer mit dem Fahrzeug verbundenen Welle, an der eine Abdeckbahn befestigt ist, die zum Abdecken des Laderaums ausziehbar ist, **dadurch gekennzeichnet**, daß die Welle (15) parallel zur Fahrtrichtung an einer Seitenwand (8, 9) des Fahrzeugs befestigt und die Abdeckbahn zum Abdecken des Laderaums senkrecht zur Fahrtrichtung ausziehbar ist.

2. Gepäckraumabdeckung nach Anspruch 1, **dadurch gekennzeichnet**, daß sie in eine Seitenverkleidung (2, 3) des Fahrzeugs integriert und die Abdeckbahn durch eine längliche Öffnung der Seitenverkleidung ausziehbar ist.

3. Gepäckraumabdeckung nach Anspruch 1 oder 2, **dadurch gekennzeichnet**, daß sie mittels einer Zugstange (7, 17) ausziehbar ist.

4. Gepäckraumabdeckung nach einem oder mehreren der vorhergehenden Ansprüche, **dadurch gekennzeichnet**, daß an der Heckklappe und/oder auf den Rückseiten der Rücksitzbank Führungen (4, 5) für die Abdeckbahn vorgesehen sind.

5. Gepäckraumabdeckung nach einem oder mehreren der vorhergehenden Ansprüche, **dadurch gekennzeichnet**, daß die drehbare Welle (15) in einer länglichen Halterung angeordnet und die Abdeckbahn (6) durch eine in der länglichen Halterung befindliche Öffnung ausziehbar ist.

6. Gepäckraumabdeckung nach einem oder mehreren der vorhergehenden Ansprüche, **dadurch gekenn**zeichnet, daß sie im ausgezogenen Zustand an einem oder mehreren fahrzeugseitigen Gegenstücken befestigbar ist.

7. Gepäckraumabdeckung nach Anspruch 6, **dadurch gekennzeichnet**, daß die fahrzeugseitigen Gegenstücke gebogene Haken (18) sind, in die die Zugstange (7, 17) einbringbar ist.

8. Gepäckraumabdeckung nach Anspruch 6, **dadurch gekennzeichnet**, daß die fahrzeugseitigen Gegenstücke Ausnehmungen sind, in die die Zugstange oder daran befestigte Haltezapfen einrastbar sind.

9. Gepäckraumabdeckung nach einem oder mehreren der Ansprüche 6-8, **dadurch gekennzeichnet**, daß das bzw. die fahrzeugseitigen Gegenstücke an bzw. in einer weiteren, gegenüberliegenden Seitenverkleidung des Fahrzeugs angeordnet sind.

10. Gepäckraumabdeckung nach einem oder mehreren der vorhergehenden Ansprüche, **dadurch gekennzeichnet**, daß sie mit dem Fahrzeug fest verbunden ist.

11. Gepäckraumabdeckung nach einem oder mehreren der vorhergehenden Ansprüche, **dadurch gekennzeichnet**, daß die beiden Stirnseiten der drehbaren Welle mittels fahrzeugseitiger Lager mit dem Fahrzeug verbunden sind.

12. Gepäckraumabdeckung nach einem oder mehreren der vorhergehenden Ansprüche, **dadurch gekennzeichnet**, daß vom Fahrzeuginnenraum aus im nicht ausgezogenen Zustand der Abdeckbahn lediglich die Zugstange sichtbar ist.

13. Gepäckraumabdeckung nach Anspruch 12, **dadurch gekennzeichnet**, daß die Zugstange im nicht ausgezogenen Zustand der Abdeckbahn in einer Vertiefung der Seitenverkleidung des Fahrzeugs zum Liegen kommt.

14. Gepäckraumabdeckung nach einem oder mehreren der vorhergehenden Ansprüche, **dadurch gekennzeichnet**, daß sie eine Dämpfungsvorrichtung aufweist, die im teilweise oder vollständig ausgezogenen Zustand der Abdeckbahn einem Zurückschnellen der Abdeckbahn entgegenwirkt.

15. Gepäckraumabdeckung nach Anspruch 14, **dadurch gekennzeichnet**, daß durch die Dämpfungsvorrichtung die Geschwindigkeit des Zurückfahrens der Abdeckbahn begrenzt ist.

16. Gepäckraumabdeckung nach Anspruch 14 oder 15, **dadurch gekennzeichnet**, daß die mit dem Fahrzeug verbundene Welle mit einem oder mehreren in einer zähen Flüssigkeit geführten Flügeln verbunden ist.

17. Gepäckraumabdeckung nach Anspruch 16, **dadurch gekennzeichnet**, daß die Flügel über ein Kupplungsglied mit der Welle verbunden sind, beim Ausziehen der Abdeckbahn von der Welle entkoppelt und beim Zurückfahren der Abdeckbahn mit der Welle fest verbunden sind.

18. Gepäckraumabdeckung nach einem oder mehreren der Ansprüche 14 - 17, **dadurch gekennzeichnet**, daß die Geschwindigkeit des Zurückfahrens variabel ist.

19. Gepäckraumabdeckung nach Anspruch 14 oder 15, **dadurch gekennzeichnet**, daß die Dämpfungsvorrichtung miteinander zusammenwirkende Zahnräder aufweist.
